# EUROPÄISCHE PATENTSCHRIFT

(11) **EP 1 096 194 B1**
(45) Veröffentlichungstag und Bekanntmachung des Hinweises auf die Patenterteilung: **03.12.2003**
(21) Anmeldenummer: 00123295.8
(22) Anmeldetag: 27.10.2000
(51) Int. Cl.: F16L 33/207

(54) **Pressfitting für ein Rohr**
Compression fitting for a pipe
Raccord à compression pour un tuyau

(30) Priorität: 28.10.1999 DE 19951800
(43) Veröffentlichungstag der Anmeldung: 02.05.2001
(73) Patentinhaber: Uponor Innovation AB, 513 81 Fristad (SE)
(72) Erfinder: Riesselmann, Franz-Josef, 49393 Lohne (DE); Brägelmann, Peter, 48607 Ochtrup (DE); Claussen, Jörg, 48329 Havixbeck (DE)
(74) Vertreter: Hilleringmann, Jochen, Dipl.-Ing.

(56) Entgegenhaltungen:
- DE-C- 4 304 680
- US-A- 5 255 944
- US-A- 5 358 012

## Beschreibung

Die Erfindung betrifft einen Pressfitting für ein Rohr, bei dem es sich insbesondere um ein Kunststoffrohr oder um ein Kunststoff/Metall-Verbundrohr handelt, wobei der Pressfitting eine Stützhülse aus Kunststoff aufweist.

Pressfittinge aus Kunststoff mit umlaufenden Ringvorsprüngen in insbesondere Sägezahnkontur sind in einer Vielzahl von Ausgestaltungen bekannt. Als ein Beispiel für einen derartigen Kunststoff-Pressfitting sei hier auf DE 197 07 827 C2 verwiesen. Die bekannten Pressfittinge weisen eine Kunststoff-Stützhülse auf, die Teil eines Fittingkörpers ist und von diesem absteht. Die Außenfläche der Stützhülse ist mit einer Vielzahl von umlaufenden Ringvorsprüngen versehen, auf die über das vordere Ende der Stützhülse das Ende eines anzuschließenden Rohres aufschiebbar sind. Das Rohr wird auf der Stützhülse gehalten, indem das Rohr von einer irreversibel plastisch verformbaren Presshülse radial gegen die Außenfläche gedrückt wird. Bei dieser "Presshülse" kann es sich entweder um eine separate Hülse handeln, die das anzuschließende Rohr von außen umgibt, oder aber als "Presshülse" fungiert die Metallschicht aus insbesondere Aluminium eines Kunststoff/Metall-Verbundrohres, die als Diffusionssperre in der Rohrwandung integriert ist.

Die Andrückkraft, die die Presshülse auf das Rohrende ausübt, ist in axial nebeneinanderliegenden Umfangsflächenbereichen der Außenfläche der Stützhülse unterschiedlich stark. So lassen sich an der Außenfläche der Stützhülse (erste) Umfangsbereiche definieren, in denen das Rohrende schwächer verpresst ist als in zweiten Umfangsbereichen. Bei einer Ringverpressung beispielsweise entsprechen die zweiten Umfangsbereiche linienförmigen Ringeinschnürungen, die die verpresste Presshülse aufweist. Die Abschnitte zwischen diesen Ringverpressungen sind dann die ersten Umfangsbereiche der Stützhülse.

Neben einer zuverlässigen axialen Zugentlastung ist das wichtigste Kriterium von Pressfittingen die fluiddichte Anlage des Rohres auf der Stützhülse.

Die Erfindung hat sich daher zur Aufgabe gestellt, einen Pressfitting mit einer Kunststoff-Stützhülse zu schaffen, bei der konstruktionsbedingt der fluiddichte Abschluss zwischen der Außenfläche der Stützhülse und der Innenfläche des anzuschließenden Rohres erzielt werden kann.

Zur Lösung dieser Aufgabe wird mit der Erfindung ein Pressfitting für Kunststoffoder Kunststoff/Metall-Verbundrohre vorgeschlagen, der versehen ist mit
- einer Stützhülse aus Kunststoff mit einer umlaufende Ringvorsprünge aufweisenden Außenfläche und einem vorderen Ende, über das das Ende eines anzuschließenden Rohres auf die Außenfläche schiebbar ist, und
- einer plastisch verformbaren Presshülse, die zum Verpressen des Rohrendes mit der Stützhülse in Richtung auf die Stützhülse stauchbar ist,
- wobei die Außenfläche der Stützhülse mindestens zwei in axialer Richtung aufeinanderfolgende Umfangsbereiche, die jeweils mindestens einen der genannten Ringvorsprünge aufweisen, zur unterschiedlich starken Verpressung des Rohrendes mit der Stützhülse aufweist und der Umfangsbereich schwächerer Verpressung ausgehend von dem vorderen Ende der Stützhülse vor dem Umfangsbereich stärkerer Verpressung angeordnet ist.

Erfindungsgemäß weist der zum Umfangsbereich geringerer Verpressung benachbarte Ringvorsprung des Umfangsbereichs stärkerer Verpressung eine geringere radiale Erstreckung auf als der zu diesem Ringvorsprung benachbarte Ringvorsprung des Umfangsbereichs geringerer Verpressung.

Die erfindungsgemäß vorgesehene konstruktive Lösung für den dichten Anschluss des Rohres an der Stützhülse wird also durch unterschiedlich hohe Ringvorsprünge realisiert. In beiden Arten von Umfangsbereichen der Stützhülse, also in dem mindestens einen (ersten) Umfangsbereich schwächerer Verpressung und in dem mindestens einen (zweiten) Umfangsbereich stärkerer Verpressung befindet sich mindestens ein erster bzw. mindestens ein zweiter Ringvorsprung, die eine unterschiedliche radiale Erstreckung aufweisen. Die Trennung der beiden Ümfangsbereiche der Stützhülse liegt zwischen dem ersten und dem zweiten Ringvorsprung. In dem Bereich stärkerer Verpressung wird auf die Stützhülse eine größere Radialkraft aufgebracht als in dem ersten Umfangsbereich. Wegen des niedrigeren zweiten Ringvorsprungs kommt es damit zu einer stärkeren radialen Stauchung des Rohres. Das wiederum bedeutet, dass es dann, wenn man benachbart zu diesem zweiten Ringvorsprung einen Ringvorsprung anordnet, der höher ist als der zweite Ringvorsprung (vorstehend und nachfolgend als erster Ringvorsprung bezeichnet), zu einer überhöhten Flächenpressung am ersten Ringvorsprung kommt. Durch geeignete Wahl des Abstandes und des Höhenunterschiedes dieser beiden Ringvorsprünge kann die sich aufbauende Flächenpressung am zweiten Ringvorsprung derart groß werden, dass der Ringvorsprung an der Innenseite des Rohres dicht anliegt. Exakt dies wird bei dem erfindungsgemäßen Pressfitting erreicht, indem die größte radiale Andrückkraft im Bereich des zweiten Ringvorsprungs erfolgt, so dass unmittelbar benachbart hierzu sozusagen das Kunststoffmaterial der Rohrwandung um den ersten Ringvorsprung herum "gezogen" wird, wodurch es zur dichten Anlage der Innenseite des Rohres und dem zweiten Ringvorsprung kommt.

Entscheidend für die Dichtfunktion beim erfindungsgemäßen Pressfitting ist also die Anordnung unterschiedlich hoher Ringvorsprünge relativ zu den Zonen stärkerer und schwächerer radialer Verpressung des Rohres. Elastischere Materialien als das der Stützhülse müssen daher bei dem erfindungsgemäßen Pressfitting nicht mehr verwendet werden. Insbesondere sind keine separaten Dichtungselemente wie O-Ringe o.dgl. erforderlich.

Aus EP-A-0 967 427 (Stand der Technik gemäß Artikel 54(3) EPÜ) und IKZ-Haustechnik, Heft 12/97, Seiten 62-67 ist es zwar bekannt, die Stützhülse eines Pressfittings mit unterschiedlich hohen umlaufenden Rippen zu versehen; in beiden Fällen dienen jedoch die Bereiche mit im Durchmesser kleineren Rippen der axialen Fixierung des Rohres auf der Stützhülse und nicht, wie bei der Erfindung, der Abdichtung des Rohres. Die beiden bekannten Pressfittinge sind daher im Unterschied zur Erfindung mit separaten Dichtelementen in Form von elastischen O-Ringen versehen.

Zweckmäßigerweise liegt der Höhenunterschied zwischen dem ersten und dem zweiten Ringvorsprung im Bereich zwischen 0,5 bis 1,0 mm und insbesondere 0,7 mm, während der axiale Abstand der beiden Ringvorsprünge etwa 1 bis 4 mm und insbesondere ca. 2 mm beträgt.

Die Ringvorsprünge können grundsätzlich jede beliebige Gestalt annehmen, beispielsweise wulstförmig ausgebildet sein. Für die Erzielung der großen Flächenpressung am ersten Ringvorsprung ist es zweckmäßig, wenn dessen dem vorderen Ende der Stützhülse abgewandte Außenkante möglichst scharfkantig ist. Dies wiederum wird zweckmäßigerweise dadurch realisiert, dass zumindest der erste Ringvorsprung, vorzugsweise aber sämtliche Ringvorsprünge, eine Sägezahnkontur mit einer im wesentlichen schrägliegenden konischen Außenflächen aufweisen, die in zum vorderen Ende der Stützhülse entgegengesetzter Richtung geneigt ist. Die Ringvorsprünge verjüngen sich also zum vorderen Ende der Stützhülse hin. Die vorstehend beschriebene Außenkante der Ringvorsprünge weist zweckmäßigerweise einen Krümmungsradius von bis zu 0,2 mm und vorzugsweise von bis zu 0,1 mm auf. An den dem vorderen Ende der Stützhülse abgewandten Innenkanten weisen die Ringvorsprünge einen Krümmungsradius von insbesondere bis zu 0,5 mm und vorzugsweise bis zu 0,3 mm auf.

Wie bereits oben dargelegt, springt die Außenkontur der Stützhülse innerhalb ihres mindestens einen zweiten Umfangsbereichs stärkerer Verpressung aufgrund des niedrigeren zweiten Ringvorsprungs zurück. Damit wird die Stützhülse von allzu großen Radial-Andrückkräften beim Pressvorgang entlastet. Dennoch sollte die Stützhülse innerhalb ihres mindestens einen Umfangsbereichs stärkerer Verpressung eine Wanddicke aufweisen, die mindestens das 10-fache des Innenradius ihres Ringvorsprungs aufweist. Mit anderen Worten ist der Quotient aus dem Innenradius und der Wanddicke der Stützhülse innerhalb ihres mindestens einen Umfangsbereichs stärkerer Verpressung größer als 0,1.

Vorzugsweise sind auf der Stützhülse mehrere Paare von Umfangsbereichen schwächerer und stärkerer Verpressung ausgebildet. Für jedes Paar gilt dabei, dass der Umfangsbereich schwächerer Verpressung näher zum vorderen Ende der Stützhülse angeordnet ist als der zugehörige Umfangsbereich stärkerer Verpressung.

Während dem oder den ersten Ringvorsprüngen in erster Linie die Dichtfunktion zukommt, dient dieser Ringvorsprung bzw. dienen diese Ringvorsprünge auch der Zugentlastung und der axialen Sicherung des Rohres auf der Stützhülse, da nämlich der auf der dem vorderen Ende der Stützhülse abgewandten Seite nächstliegende zweite Ringvorsprung jeweils eine geringere Höhe aufweist. Je nach den Anforderungen, die an die Zugentlastung gestellt werden, ist es zweckmäßig, innerhalb eines weiteren Paares von weiteren Umfangsbereichen schwächerer und stärkerer Verpressung einen Ringvorsprung vorzusehen, der höheren axialen Zugbeanspruchungen standhält als die anderen Ringvorsprünge dieses Umfangsbereichs und/oder als die Ringvorsprünge der anderen Umfangsbereiche schwächerer Verpressung der Stützhülse. Dieser Ringvorsprung höherer axialer Zugbeanspruchung entspricht also dem oben genannten ersten Ringvorsprung eines Umfangsbereichs geringerer Verpressung. Benachbart zu diesem Ringvorsprung des weiteren Umfangsbereichs geringerer Verpressung befindet sich ein Umfangsbereich stärkerer Verpressung, der im wesentlichen frei von Ringvorsprüngen ist. Der radiale Versatz in der Außenkontur der Stützhülse im Übergangsbereich zwischen dem weiteren Umfangsbereich geringerer Verpressung zum weiteren Umfangsbereich stärkerer Verpressung ist also durch die Höhe des Ringvorsprungs höherer axialer Zugbeanspruchung bestimmt. Die höhere axiale Zugbeanspruchung kann durch entsprechend breitere Ausgestaltung des Ringvorsprungs, entsprechende Rundung der Außenfläche dieses Ringvorsprungs sowie durch die Höhe des Ringvorsprungs realisiert werden.

Vorzugsweise schließt sich an den weiteren Umfangsbereich stärkerer Verpressung wiederum ein Umfangsbereich schwächerer Verpressung an, in dem die Außenfläche der Stützhülse konisch ist, bis der Außendurchmesser der Stützhülse gleich dem Außendurchmesser des Ringvorsprungs höherer axialer Zugbeanspruchung und gleich dem Außendurchmesser der ersten Ringvorsprünge ist. An diesen Umfangsbereich schwächerer Verpressung schließt sich zweckmäßigerweise ein Verdrehsicherungsbereich der Stützhülse an, in dem die Außenfläche der Stützhülse mit axial verlaufenden Längsrippen versehen ist. Diese Längsrippen verhindern ein unbeabsichtigtes Verdrehen des verpressten Rohres relativ zur Stützhülse.

Die Erfindung wird nachfolgend anhand eines Ausführungsbeispiels und unter Bezugnahme auf die Zeichnung näher erläutet. Im einzelnen zeigen:
- Fig. 1: den Fittingkörper eines erfindungsgemäßen Pressfittings in Seitenansicht und
- Fig. 2: einen Halbschnitt durch den Fittingkörper gemäß Fig. 1 mit an diesem angeschlossenen Rohr.

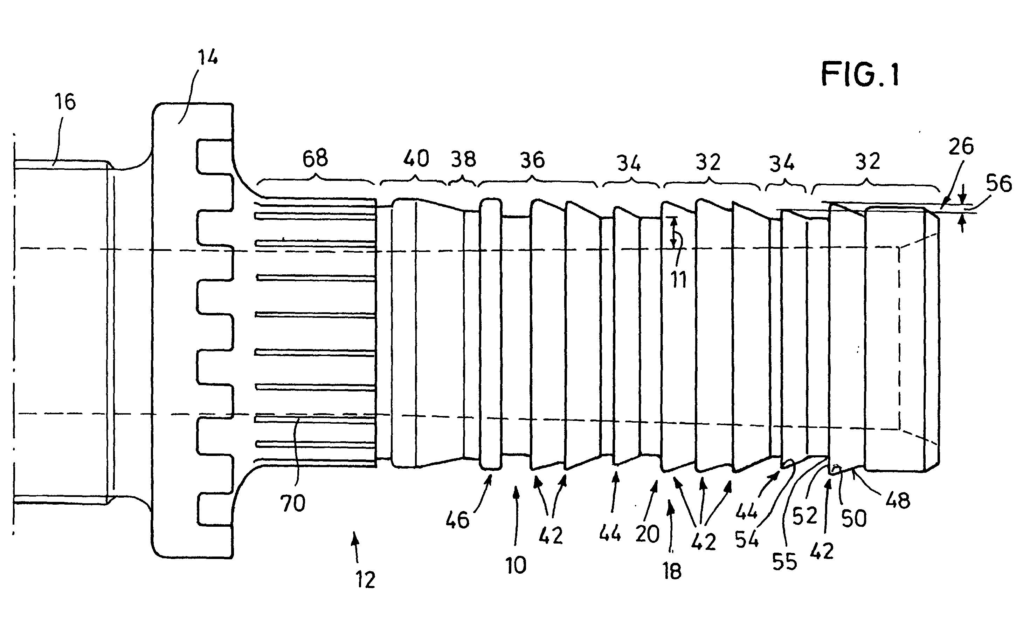

In Fig. 1 ist ein Pressfitting 10 dargestellt, dessen Fittingkörper 12 einen Bund 14 und einen Gewindeabschnitt 16 aufweist. Auf der dem Gewindeabschnitt 16 abgewandten Seite des Bundes 14 steht vom Fittingkörper 12 eine Stützhülse 18 ab. Der gesamte Fittingkörper 12 und die Stützhülse 18 bestehen aus einem hochtemperaturfesten Kunststoffmaterial, beispielsweise PSU oder PPSU. Unter "hochtemperaturfestem Kunststoff" wird ein Kunststoffmaterial verstanden, das Temperaturen von 200 bis 250 °C standhält.

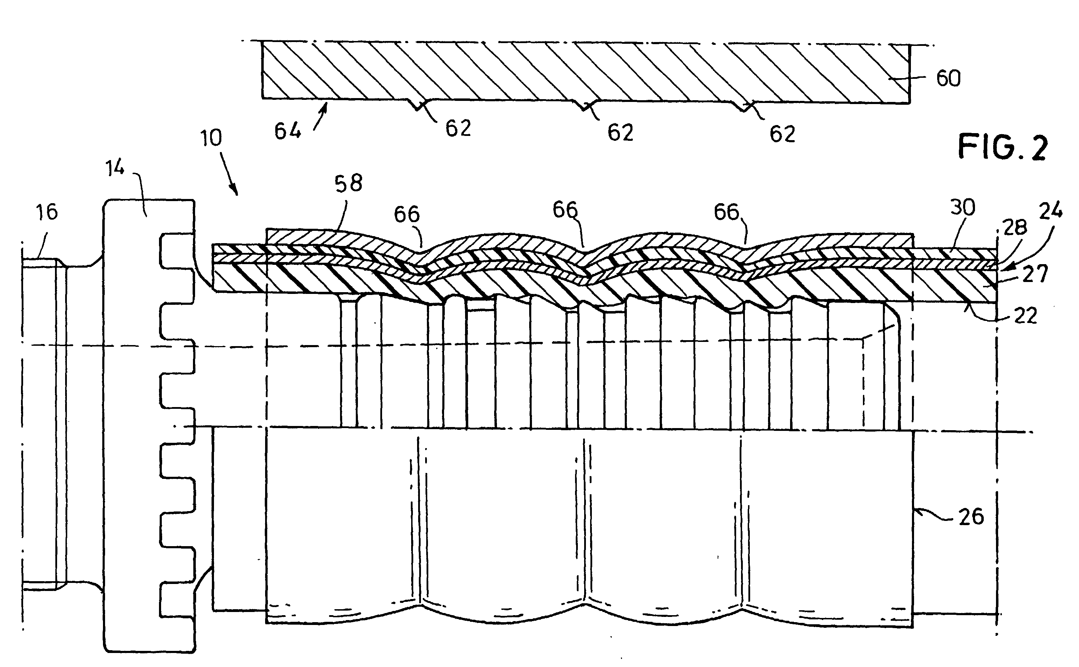

Gemäß Fig. 1 weist die Stützhülse 18 eine mit einer Sägezahnkontur versehene Außenfläche 20 auf. Mit dieser Außenfläche 20 liegt die Stützhülse 18 an der Innenfläche 22 eines Rohres 24 an, das über das dem Bund 14 abgewandte vordere Ende 26 der Stützhülse 18 bis nahe dem Bund 14 über die Außenfläche 20 geschoben wird (s. Fig. 2). In diesem Ausführungsbeispiel handelt es sich bei dem Rohr 24 um ein Kunststoff/Metall-Verbundrohr, das ein Kunststoffbasisrohr 27, eine Aluminium-Metallschicht 28 und eine Kunststoff-Außenschicht 30 aufweist. Als Kunststoffmaterial für dieses Rohr 24 wird beispielsweise PEX verwendet.

Wie in Fig. 1 gezeigt, weist die Stützhülse 18 mehrere axial benachbarte Umfangsbereiche 32,34,36,38,40 auf, die mit unterschiedlich hohen Ringvorsprüngen 42,44,46 versehen sind. Die Ringvorsprünge 42,44 weisen dabei eine Sägezahnstruktur auf, wobei ihre Außenflächen 48 konisch verlaufen und zum Bund 14 hin geneigt sind. Die sägezahnförmigen Ringvorsprünge 42 der Umfangsbereiche 32 springen dabei gegenüber den sägezahnförmigen Ringvorsprüngen 44 der Umfangsbereiche 34 radial vor. Die dem Bund 14 zugewandten Außenkanten 50 zwischen den konischen Außenflächen 48 und den Radialflanken 52 der Ringvorsprünge 42 sind dabei verhältnismäßig scharf ausgebildet und weisen einen Krümmungsradius zwischen 0,1 und 0,2 mm auf. Zweckmäßigerweise sind auch die entsprechenden Außenkanten 54 der Ringvorsprünge 34 mit diesen Krümmungsradien versehen. Die Innenkanten 55 der Radialflanken 52 weisen einen Radius zwischen 0,3 und 0,5 mm auf. Der Umfangsbereich 36 ist neben den beiden sägezahnförmigen Ringvorsprüngen 42 mit einem weiteren Ringvorsprung 46 versehen, der nach Art eines Ringwulstes ausgebildet ist und schwächer gerundete Außenkanten aufweist. Während die Umfangsbereiche 32 und 36 ein bzw. mehrere, insbesondere drei Ringvorsprünge 42,46 aufweisen, sind die Umfangsbereiche 34 mit lediglich einem sägezahnförmigen Ringvorsprung 44 versehen.

Die Bedeutung des radialen Versatzes 56 zwischen den einander zugewandten Ringvorsprüngen 42,44 jeweils zweier Umfangsbereiche 32,34 wird anhand von Fig. 2 deutlich. Diese Figur zeigt den Pressfitting 10 im verpressten Zustand. In diesem Ausführungsbeispiel wird zum radialen Aufpressen des Rohres 24 auf die Stützhülse 18 eine Metallpresshülse 58 eingesetzt, die von außen auf das Rohr 24 aufgeschoben ist. Diese Presshülse 58 wird mittels eines Presswerkzeugs 60 radial gestaucht, wobei das Presswerkzeug 60 in Umfangsrichtung verlaufende Rippen 62 aufweist, die an der Innenseite 64 des Presswerkzeuges 60 vorstehen und der Presshülse 58 im verpressten Zustand die Form gemäß Fig. 2 verleihen. Aufgrund der Rippen 62 weist die Presshülse 58 im verpressten Zustand ringförmige Einschnürungen 66 auf, die in Höhe der Umfangsbereiche 34 der Stützhülse 18 angeordnet sind. Aufgrund dieser ringförmigen Einschnürungen 66 erfährt das Rohr 24 innerhalb der Umfangsbereiche 34,38 der Stützhülse 18 eine stärkere radial einwärts gerichtete Verformung als in den übrigen Umfangsbereichen. Bei den Umfangsbereichen 34,38 handelt es sich also um Umfangsbereiche stärkerer Verpressung, während innerhalb der Umfangsbereiche 32,36,40 eine schwächere Verpressung erfolgt. Da das Rohr 24 innerhalb der Umfangsbereiche 34,38 stärker radial gestaucht wird als in den jeweils benachbarten Umfangsbereichen 32,36, kommt es an den Außenkanten 50 der ausgehend von den Umfangsbereichen 34 nächst benachbarten Ringvorsprüngen 42 der Umfangsbereiche 32 zu einer extrem starken Flächenpressung der Innenfläche 22 des Rohres 24 gegen die Außenkanten 50. Diese hohe Flächenpressung sorgt für den fluiddichten Abschluss zwischen der Stützhülse 18 und dem Rohr 24.

Wie anhand der Figuren zu erkennen ist, wird das Rohr 24 auch innerhalb des Umfangsbereichs 38 bis gegen die Stützhülse 18 gepresst, so dass der sich zum vorderen Ende 26 der Stützhülse 18 anschließende wulstartige Ringvorsprung 46 von dem Material des Rohres 24 umgriffen ist. Dieser Ringvorsprung 46 dient in erster Linie nicht zum abdichtenden Abschluss sondern vielmehr der axialen Zugentlastung, da er aufgrund seiner Konstruktion höhere axialen Zugbelastungen standhält als die übrigen Ringvorsprünge 42,44. Hierbei ist jedoch zu berücksichtigen, dass die Ringvorsprünge 42 neben ihrer Hauptfunktion, nämlich dem Abdichten, auch in gewisser Weise zur Zugentlastung beitragen.

An den Umfangsbereich 38 schließt sich in Richtung Bund 14 ein konischer Umfangsabschnitt 40 an, der in einen Verdrehsicherungsbereich 68 der Stützhülse 18 übergeht. In diesem Bereich 68 weist die Außenfläche 20 der Stützhülse 18 mehrere über ihren Umfang verteilte Längsrippen 70 auf, gegen die das Rohr 24 im verpressten Zustand gedrückt wird (s. Fig. 2). Hierdurch entsteht eine Verdrehsicherung des Rohres 24 auf der Stützhülse 18.

## Patentansprüche

1. Pressfitting für Kunststoff- oder Kunststoff/Metall-Verbundrohre mit
- einer Stützhülse (18) aus Kunststoff mit einer umlaufende Ringvorsprünge (42,44,46) aufweisenden Außenfläche (20) und einem vorderen Ende (26), über das das Ende eines anzuschließenden Rohres (24) auf die Außenfläche (20) schiebbar ist, und
- einer plastisch verformbaren Presshülse (58), die zum Verpressen des Rohrendes mit der Stützhülse (18) in Richtung auf die Stützhülse (18) stauchbar ist,
- wobei die Außenfläche (20) der Stützhülse (18) mindestens zwei in axialer Richtung aufeinanderfolgende Umfangsbereiche (32,34), die jeweils mindestens einen der genannten Ringvorsprünge (42, 44) zur unterschiedlich starken Verpressung des Rohrendes mit der Stützhülse (18) aufweist und der Umfangsbereich (32) schwächerer Verpressung ausgehend von dem vorderen Ende (26) der Stützhülse (18) vor dem Umfangsbereich (34) stärkerer Verpressung angeordnet ist,
**dadurch gekennzeichnet,**
- **dass** der zum Umfangsbereich (32) schwächerer Verpressung benachbarte Ringvorsprung (44) des Umfangsbereichs (34) stärkerer Verpressung eine geringere radiale Erstreckung aufweist als der zu diesem Ringvorsprung (44) benachbarte Ringvorsprung (42) des Umfangsbereichs (32) schwächerer Verpressung.

2. Pressfitting nach Anspruch 1, **dadurch gekennzeichnet, dass** die Ringvorsprünge (42,44) jeweils eine Sägezahnkontur mit einer im wesentlichen konischen Außenfläche (48) aufweisen, die in zum vorderen Ende (26) der Stützhülse (18) entgegengesetzter Richtung geneigt sind.

3. Pressfitting nach Anspruch 1 oder 2, **dadurch gekennzeichnet, dass** jeder Ringvorsprung (42,44) eine dem vorderen Ende (26) der Stützhülse (18) abgewandte Außenkante (50) aufweist und dass diese Außenkanten (50) jeweils einen Krümmungsradius bis zu 0,2 mm, vorzugsweise bis zu 0,1 mm aufweisen.

4. Pressfitting nach einem der Ansprüche 1 bis 3, **dadurch gekennzeichnet, dass** jeder Ringvorsprung (42,44) eine dem vorderen Ende (26) der Stützhülse (18) abgewandte Innenkante (55) aufweist und dass diese Innenkanten (55) jeweils einen Krümmungsradius von bis zu 0,5 mm, vorzugsweise bis zu 0,3 mm aufweisen.

5. Pressfitting nach Anspruch 4, **dadurch gekennzeichnet, dass** der Absolutwert des Quotienten aus dem Innenradius und der Wanddicke der Stützhülse (18) innerhalb seines mindestens einen Umfangsbereichs (34) größerer Verpressung größer als 0,1 mm ist.

6. Pressfitting nach einem der Ansprüche 1 bis 5, **dadurch gekennzeichnet, dass** die Außenfläche (20) der Stützhülse (18) mehrere Paare von Umfangsbereichen (32,34) geringerer und stärkerer Verpressung aufweist.

7. Pressfitting nach einem der Ansprüche 1 bis 6, **dadurch gekennzeichnet, dass** die Außenfläche (20) der Stützhülse (18) ein weiteres Paar von weiteren Umfangsbereichen (36,38) geringerer und stärkerer Verpressung aufweist, wobei der dem weiteren Umfangsbereiche (38) stärkerer Verpressung benachbarte Ringvorsprung (46) des Umfangsbereichs (36) schwächerer Verpressung höheren axialen Zugbeanspruchungen standhält als die anderen Ringvorsprünge (42) dieses Umfangsbereichs (36) schwächerer Verpressung und/oder als die Ringvorsprünge (42) der anderen Umfangsbereiche (32) schwächerer Verpressung der Stützhülse (18).

8. Pressfitting nach Anspruch 7, **dadurch gekennzeichnet, dass** der weitere Umfangsbereich (38) stärkerer Verpressung frei von Ringvorsprüngen ist.

9. Pressfitting nach Anspruch 7 oder 8, **dadurch gekennzeichnet, dass** sich auf der dem vorderen Ende (26) abgewandten Seite des weiteren Umfangsbereichs (38) stärkerer Verpressung ein Umfangsbereich (40) schwächerer Verpressung anschließt, in dem die Stützhülse (18) konisch ist.

10. Pressfitting nach einem der Ansprüche 1 bis 9, **dadurch gekennzeichnet, dass** die Außenfläche (20) der Stützhülse (18) frei von separaten Dichtelementen ist.

11. Pressfitting nach einem der Ansprüche 1 bis 10, **dadurch gekennzeichnet, dass** die Stützhülse (28) aus einem hochtemperaturbeständigen Kunststoff, insbesondere aus PSU oder PPSU besteht.

12. Pressfitting nach einem der Ansprüche 1 bis 11, **dadurch gekennzeichnet, dass** die Presshülse (58) aus Metall besteht.

13. Pressfitting nach einem der Ansprüche 1 bis 12, **dadurch gekennzeichnet, dass** die Presshülse (58) auf das anzuschließende Rohr (24) aufschiebbar ist.

14. Pressfitting nach einem der Ansprüche 1 bis 12, **dadurch gekennzeichnet, dass** die Presshülse integraler Bestandteil des Rohres und in Form einer Metall-Diffusionssperrschicht insbesondere aus Aluminium des Rohres ausgebildet ist.

## Claims

1. A press fitting for plastics tubes or plastics/metal composite tubes, comprising:
a supporting sleeve (18) of plastics material with an outer surface (20) having circumferentially extending annular protrusions (42, 44, 46) and a front end (26) over which the end of a tube (24) to be connected may be slipped onto the outer surface (20), and
a plastically deformable compression sleeve (58) that can be upset in the direction of the supporting sleeve ( 18) for pressing the tube end onto the supporting sleeve (18),
the outer surface (20) of the supporting sleeve (18) comprising at least two axially successive circumferential portions (32, 34), each having at least one of the above annular protrusions (42, 44), for pressing the tube end onto the supporting sleeve (18) with different magnitudes of pressure force, the circumferential portion (32) for weaker pressing being located before the circumferential portion (34) for stronger pressing, starting at the front end (26) of the supporting sleeve (18),
**characterized in that**
the annular protrusion (44) of the circumferential portion (34) for stronger pressing adjacent the circumferential portion (32) for weaker pressing is of a smaller radial extension than the annular protrusion (42) of the circumferential portion for weaker pressing (32) adjacent this annular protrusion (44).

2. The press fitting of claim 1, wherein the annular protrusions (42, 44) each have a serrated contour with a substantially conical outer surface (48) inclined in the direction opposite to the front end (26) of the supporting sleeve (18).

3. The press fitting of claim 1 or 2, wherein each annular protrusion (42, 44) has an outer edge (50) averted from the front end (26) of the supporting sleeve (18) and wherein these outer edges (50) each have a radius of curvature up to 0.2 mm, preferably up to 0.1 mm.

4. The press fitting of one of claims 1 to 3, wherein each annular protrusion (42, 44) has an inner edge (55) averted from the front end (26) of the supporting sleeve (18) and wherein these inner edges (55) each have a radius of curvature up to 0.5 mm, preferably up to 0.3 mm.

5. The press fitting of claim 4, wherein the absolute value of the quotient from the inner radius and the wall thickness of the supporting sleeve (18) is larger than 0.1 mm within its at least one circumferential portion for weaker pressing.

6. The press fitting of one of claims 1 to 5, wherein the outer surface (20) of the supporting sleeve (18) has several pairs of circumferential portions (32, 34) for weaker and for stronger pressing.

7. The press fitting of one of claims 1 to 6, wherein the outer surface (20) of the supporting sleeve (18) has another pair of circumferential portions (32, 34) for weaker and for stronger pressing, wherein the annular protrusion (46) of the circumferential portion for weaker pressing adjacent the further circumferential portion for stronger pressing can accommodate higher axial strain than the other annular protrusions (42) of this circumferential portion (36) for weaker pressing and/or the annular protrusions (42) of the other circumferential portions (32) for weaker pressing of the supporting sleeve (18).

8. The press fitting of claim 7, wherein the other circumferential portion for stronger pressing is free of annular protrusions.

9. The press fitting of claim 7 or 8, wherein, on the side averted from the front end (26), the other circumferential portion for stronger pressing is followed by another circumferential portion for weaker pressing in which the outer surface of the supporting sleeve (18) is conical.

10. The press fitting of one of claims 1 to 9, wherein the outer surface (20) of the supporting sleeve (18) is free of separate sealing elements.

11. The press fitting of one of claims 1 to 10, wherein the supporting sleeve ( 18) is made of a high-temperature resistant plastics material, in particular PSU or PPSU.

12. The press fitting of one of claims 1 to 11, wherein the compression sleeve (58) is made of metal.

13. The press fitting of one of claims 1 to 12, wherein the compression sleeve (58) may be slipped onto the tube (24) to be connected.

14. The press fitting of one of claims 1 to 12, wherein the compression sleeve is an integral part of the tube and is in the form ofa metal diffusion barrier layer of the tube, in particular of aluminum.

## Revendications

1. Raccord emmanché pour des tubes en matière plastique ou pour des tubes composites en matière plastique/métal, comportant
- une douille de soutien (18) en matière plastique avec une surface extérieure (20) présentant des saillies annulaires périphériques (42, 44, 46) et avec une extrémité avant (26) sur laquelle l'extrémité d'un tube à raccorder (24) peut être enfilée sur la surface extérieure (20), et
- une douille d'emmanchement (58) plastiquement déformable susceptible d'être refoulée en direction de la douille de soutien (18) pour emmancher l'extrémité du tube avec la douille de soutien (18),
- dans lequel la surface extérieure (20) de la douille de soutien (18) comprend au moins deux zones périphériques (32, 34) successives en direction axiale et présentant chacune au moins l'une desdites saillies annulaires (42, 44), pour l'emmanchement à des intensités différentes de l'extrémité du tube avec la douille de soutien (18), et la zone périphérique (32) d'emmanchement plus faible est agencée en avant de la zone périphérique (34) d'emmanchement plus fort en partant de l'extrémité avant (26) de la douille de soutien (18),
**caractérisé en ce que**
- la saillie annulaire (44), voisine de la zone périphérique (32) d'emmanchement plus faible, de la zone périphérique (34) d'emmanchement plus fort présente une extension radiale plus petite que la saillie annulaire (42), voisine de cette saillie annulaire (44), de la zone périphérique (32) d'emmanchement plus faible.

2. Raccord emmanché selon la revendication 1, **caractérisé en ce que** les saillies annulaires (42, 44) présentent chacune un contour en dents de scie avec une surface extérieure (48) sensiblement conique, qui sont inclinées dans la direction opposée à l'extrémité avant (26) de la douille de soutien (18).

3. Raccord emmanché selon l'une ou l'autre des revendications 1 et 2, **caractérisé en ce que** chaque saillie annulaire (42, 44) présente une arête extérieure (50) détournée de l'extrémité avant (26) de la douille de soutien (18), et **en ce que** ces arêtes extérieures (50) présentent chacune un rayon de courbure allant jusqu'à 0,2 mm, de préférence jusqu'à 0,1 mm.

4. Raccord emmanché selon l'une des revendications 1 à 3, **caractérisé en ce que** chaque saillie annulaire (42, 44) présente une arête intérieure (55) détournée de l'extrémité avant (26) de la douille de soutien (18), et **en ce que** ces arêtes intérieures (55) présentent chacune un rayon de courbure allant jusqu'à 0,5 mm, de préférence jusqu'à 0,3 mm.

5. Raccord emmanché selon la revendication 4, **caractérisé en ce que** la valeur absolue du quotient du rayon intérieur sur l'épaisseur de paroi de la douille de soutien (18) à l'intérieur de sa au moins une zone périphérique (34) d'emmanchement plus fort est supérieure à 0,1.

6. Raccord emmanché selon l'une des revendications 1 à 5, **caractérisé en ce que** la surface extérieure (20) de la douille de soutien (18) comprend plusieurs paires de zones périphériques (32, 34) d'emmanchement plus faible et d'emmanchement plus fort.

7. Raccord emmanché selon l'une des revendications 1 à 6, **caractérisé en ce que** la surface extérieure (20) de la douille de soutien (18) comprend une autre paire d'autres zones périphériques (36, 38) d'emmanchement plus faible et d'emmanchement plus fort, la saillie annulaire (46), voisine de l'autre zone périphérique (38) d'emmanchement plus fort, de la zone périphérique (36) d'emmanchement plus faible supporte des sollicitations axiales en traction plus élevées que les autres saillies annulaires (42) de cette zone périphérique (36) d'emmanchement plus faible et/ou que les saillies annulaires (42) des autres zones périphériques (32) d'emmanchement plus faible de la douille de soutien (18).

8. Raccord emmanché selon la revendication 7, **caractérisé en ce que** l'autre zone périphérique (38) d'emmanchement plus fort est dépourvue de saillies annulaires.

9. Raccord emmanché selon l'une ou l'autre des revendications 7 et 8, **caractérisé en ce que** sur le côté, détourné de l'extrémité avant (26), de l'autre zone périphérique (38) d'emmanchement plus fort, se raccorde une zone périphérique (40) d'emmanchement plus faible dans laquelle la douille de soutien (18) est conique.

10. Raccord emmanché selon l'une des revendications 1 à 9, **caractérisé en ce que** la surface extérieure (20) de la douille de soutien (18) est dépourvue d'éléments d'étanchement séparés.

11. Raccord emmanché selon l'une des revendications 1 à 10, **caractérisé en ce que** la douille de soutien (28) est constituée en matière plastique résistante à des températures élevées, en particulier en PSU ou en PPSU.

12. Raccord emmanché selon l'une des revendications 1 à 11, **caractérisé en ce que** la douille d'emmanchement (58) est constituée en métal.

13. Raccord emmanché selon l'une des revendications 1 à 12, **caractérisé en ce que** la douille d'emmanchement (58) est susceptible d'être enfilée sur le tube à raccorder (24).

14. Raccord emmanché selon l'une des revendications 1 à 12, **caractérisé en ce que** la douille d'emmanchement fait partie intégrale du tube et est réalisée sous la forme d'une couche de blocage de diffusion en métal, en particulier en aluminium du tube.
